# DEMANDE DE BREVET EUROPEEN

(11) **EP 1 195 094 A1**
(43) Date de publication de la demande: **10.04.2002**
(21) Numéro de dépôt: 01402535.7
(22) Date de dépôt: 02.10.2001
(51) Int. Cl.: A22C 29/00

(54) **Dispositif pour l'égrappage, le nettoyage et le calibrage de moules**

(30) Priorité: 09.10.2000 FR 0012963
(71) Demandeur: Delmas, Yvan, 34140 Meze (FR)
(72) Inventeur: Delmas, Yvan, 34140 Meze (FR)

(57) **Abrégé**

Dispositif pour l'égrappage, le nettoyage et le calibrage de moules, du genre comportant essentiellement une trémie d'alimentation (1), un cylindre constitué d'une grille de calibrage (4) à barreaux parallèles en arc de cercle, d'un capot (5) fraction-cylindrique et des moyens d'égrappage, de nettoyage et de déplacement des moules.

Le dispositif selon l'invention se caractérise en ce que le moyen assurant les fonctions de nettoyage et de déplacement des moules le long de la grille (4), est constitué d'une brosse hélicoïdale continue (6) qui s'étend du fond (2) de la trémie à l'ouverture (7) du cylindre (4,5) et en ce que ladite grille (4) comporte des barreaux, à espacements croissants, aptes à définir un tri sélectif, les plus grosses moules étant évacuées à l'extrémité (7) dudit cylindre.

## Description

L'invention concerne un dispositif pour l'égrappage, le nettoyage et le calibrage de moules, du genre comportant :
- une trémie d'alimentation comportant un fond fraction-cylindrique et une ouverture basse cylindrique concentrique à ladite fraction cylindrique;
- un cylindre, pour le traitement des moules, situé dans le prolongement de ladite ouverture et constitué d'une grille de calibrage, à barreaux parallèles en arc de cercle, et d'un capot, fraction-cylindrique;
- des moyens d'égrappage, de nettoyage et de déplacement des moules situés à l'intérieur dudit cylindre.

Les dispositifs connus du genre en question sont essentiellement décrits dans les brevets :
- FR-2598283 qui traite d'un égrappeur-calibreur pour grappes de moules dont la fonction d'égrappage est réalisée au moyen de palettes hélicoïdales et de bras radiaux solidaires d'un arbre rotatif et dont la fonction triage est réalisée au moyen d'une grille à ouverture réglable. Le tri s'effectue sur un seul calibre à la fois, les moules les plus petites étant éliminées et les moules au calibre souhaité tombant à l'extrémité de la grille. Aucun nettoyage n'est effectué sur lesdites moules.
- FR-2638943 qui traite d'un dispositif pour le nettoyage et le triage des moules dont la fonction de nettoyage est réalisée au moyen de barres parallèles orientées suivant l'axe du cylindre et situées dans la première partie de celui-ci et dont la fonction de triage est réalisée au moyen de barres parallèles en arc de cercle situées dans sa deuxième partie.
Le tri s'effectue également sur un seul calibre et les fonctions de nettoyage et de triage sont juxtaposées. La fonction de progression des moules dans le cylindre est réalisée au moyen d'une structure hélicoïdale.

Le dispositif selon l'invention se caractérise essentiellement en ce que :
- le moyen assurant les fonctions de nettoyage et de déplacement des moules le long de la grille, est réalisé au moyen d'une brosse hélicoïdale continue qui s'étend du fond de la trémie à l'ouverture du cylindre;
- ladite grille comporte des barreaux, à espacements croissants, aptes à définir un tri sélectif, les moules les plus grosses étant évacuées à l'extrémité dudit cylindre;
- le moyen assurant la fonction d'égrappage est réalisé au moyen d'éléments de brosse placés entre les spires de la brosse de nettoyage et de déplacement des moules et solidaires du même axe que celle-ci.
Un tel dispositif est de conception simple car il regroupe, autour du même axe rotatif, les fonctions d'égrappage, de nettoyage et de calibrage sélectif en association avec la grille en regard de la brosse hélicoïdale.

Les caractéristiques et les avantages de l'invention vont apparaître plus clairement à la lecture de la description détaillée qui suit d'au moins un mode de réalisation préféré de celle-ci donné à titre d'exemple non-limitatif et représenté aux dessins annexés. Sur ces dessins :
- la figure 1 est une vue en coupe longitudinale (EE) du dispositif selon l'invention;
- la figure 2 est une vue en coupe transversale (DD) du cylindre pour le traitement des moules;
- la figure 3 est une vue de dessus de la brosse longitudinale pour l'égrappage additionnel.

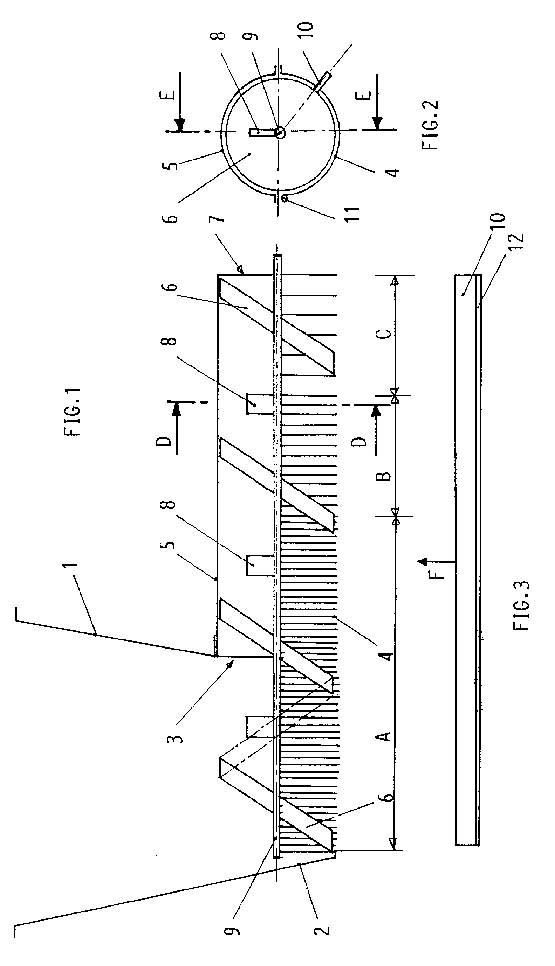

Le dispositif pour l'égrappage, le nettoyage et le calibrage de moules, représenté aux figures, est du genre comportant essentiellement :
- une trémie d'alimentation (1) constituée d'un fond fraction-cylindrique (2) et d'une ouverture basse cylindrique (3) concentrique à ladite fraction cylindrique;
- un cylindre, pour le traitement des moules, situé dans le prolongement de ladite ouverture (3) et constitué d'une grille de calibrage (4), à barreaux parallèles en arc de cercle, et d'un capot (5), fraction-cylindrique, ladite grille constituant le fond de ladite trémie;
- des moyens d'égrappage, de nettoyage et de déplacement des moules situés à l'intérieur dudit cylindre;

Selon les caractéristiques principales de l'invention :
- le moyen assurant les fonctions de nettoyage et de déplacement des moules le long de la grille (4), est constitué d'une brosse hélicoïdale continue (6) qui s'étend du fond (2) de la trémie à l'ouverture (7) du cylindre (4,5);
- la grille (4) est constituée de barreaux, à espacements croissants, aptes à définir un tri sélectif, les moules les plus grosses étant évacuées à l'extrémité (7) dudit cylindre;
- le moyen assurant la fonction d'égrappage est constitué d'éléments de brosse (8) placés entre les spires de la brosse (6) solidaires du même axe (9) que celle-ci.

Selon d'autres caractéristiques de l'invention :
- le moyen assurant la fonction d'égrappage est constitué, en addition, d'au moins une brosse longitudinale (10) dont les poils traversent radialement la grille (4);
- ladite grille est pivotante angulairement autour d'un axe (11) de manière à compenser l'usure des poils de la brosse (6);
- ladite grille comporte des barreaux à espacements constants dans chaque zone (A), (B) ou (C) mais croissants d'une zone à l'autre de manière à définir plusieurs calibres par dispositif;
- la brosse (10) est réglable, en déplacement radial, de manière à modifier son action d'égrappage et à compenser l'usure de ses poils (10), ces derniers étant solidaires d'une barrette rigide (12) elle-même solidaire de moyens de déplacement selon la flèche (F).
Le dispositif selon l'invention comporte également une rampe pour le nettoyage en eau des moules ainsi qu'un motoréducteur placé en bout d'arbre.

Bien entendu, l'invention n'est pas limitée aux modes de réalisation décrits et représentés pour lesquels on pourra prévoir d'autres variantes, en particulier dans :
- le type, la forme et les dimensions de la brosse hélicoïdale (6);
- le type, la forme, les dimensions et le nombre des éléments de brosse (8);
- les espacements des barreaux de la grille, sa longueur et le nombre de zones de tri; et l'étendre au traitement d'autres coquillages.

## Revendications

1. Dispositif pour l'égrappage, le nettoyage et le calibrage de moules, du genre comportant essentiellement :
- une trémie d'alimentation (1) comportant un fond fraction-cylindrique (2) et une ouverture basse cylindrique (3) concentrique à ladite fraction cylindrique;
- un cylindre, pour le traitement des moules, situé dans le prolongement de ladite ouverture (3) et constitué d'une grille de calibrage (4), à barreaux parallèles en arc de cercle, et d'un capot (5), fraction-cylindrique;
- des moyens d'égrappage, de nettoyage et de déplacement des moules situés à l'intérieur dudit cylindre;
**caractérisé en ce que** le moyen assurant les fonctions de nettoyage et de déplacement des moules le long de la grille (4), est constitué d'une brosse hélicoïdale continue (6) qui s'étend du fond (2) de la trémie à l'ouverture (7) du cylindre (4,5) et **en ce que** ladite grille (4) comporte des barreaux, à espacements croissants, aptes à définir un tri sélectif, les plus grosses moules étant évacuées à l'extrémité (7) dudit cylindre.

2. Dispositif, selon la revendication 1, **caractérisé en ce que** le moyen assurant la fonction d'égrappage est constitué d'éléments de brosse (8) placés entre les spires de la brosse (6) solidaires du même axe (9) que celle-ci.

3. Dispositif, selon la revendication 2, **caractérisé en ce que** le moyen assurant la fonction d'égrappage est constitué, en addition, d'au moins une brosse longitudinale (10) dont les poils traversent radialement la grille (4).

4. Dispositif, selon la revendication 1, **caractérisé en ce que** la grille (4) est pivotante et réglable angulairement autour d'un axe (11) de manière à compenser l'usure des poils de la brosse (6).

5. Dispositif, selon la revendication 1, **caractérisé en ce que** la grille (4) comporte des barreaux à espacements constants dans chaque zone (A), (B) ou (C) mais croissants d'une zone à l'autre.

6. Dispositif, selon la revendication 3, **caractérisé en ce que** la brosse longitudinale (10) est réglable, en déplacement radial, de manière à modifier son action d'égrappage et à compenser l'usure de ses poils.
